(19) **Europäisches Patentamt**
**European Patent Office**
**Office européen des brevets**

(11) **EP 0 554 384 B1**

(12) **EUROPEAN PATENT SPECIFICATION**

(45) Date of publication and mention
of the grant of the patent:
**11.09.1996 Bulletin 1996/37**

(51) Int Cl.[6]: **G08B 5/22**, H03D 3/00,
H03G 5/24

(21) Application number: **91920570.8**

(22) Date of filing: **30.09.1991**

(86) International application number:
**PCT/US91/07201**

(87) International publication number:
**WO 92/06786 (30.04.1992 Gazette 1992/10)**

(54) **SELECTIVE CALL RECEIVER WITH DECODER CONTROLLED FILTERS**

SELEKTIVER RUFEMPFÄNGER MIT DURCH DEN DEKODER GESTEUERTEN FILTERN

RECEPTEUR D'APPEL SELECTIF COMPRENANT DES FILTRES COMMANDES PAR DECODEUR

(84) Designated Contracting States:
**AT BE CH DE DK ES FR GB GR IT LI LU NL SE**

(30) Priority: **22.10.1990 US 601979**

(43) Date of publication of application:
**11.08.1993 Bulletin 1993/32**

(73) Proprietor: **MOTOROLA, INC.**
**Schaumburg, IL 60196 (US)**

(72) Inventor: **MITTEL, James, G.**
**Boynton Beach, FL 33437 (US)**

(74) Representative: **Dunlop, Hugh Christopher et al**
**Motorola,**
**European Intellectual Property,**
**Midpoint,**
**Alencon Link**
**Basingstoke, Hampshire RG21 7PL (GB)**

(56) References cited:
**EP-A- 0 204 088       GB-A- 2 136 181**
**GB-A- 2 222 332       US-A- 3 626 311**
**US-A- 4 045 740       US-A- 4 472 685**
**US-A- 4 521 916**

## Description

Field of the Invention

This invention relates in general to controlled filters, and more specifically to a selective call receiver with decoder controlled filters.

Background of the Invention

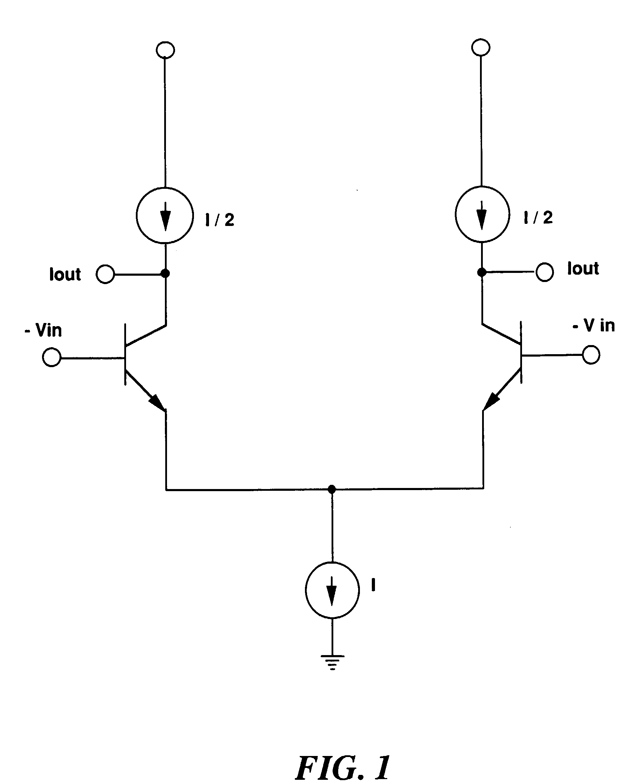

Conventional selective call receivers (e.g., paging receivers) typically use ceramic resonator filters to generate most of the receiver's adjacent channel selectivity. Ceramic filters used in selective call receivers normally have a center frequency of 455 kHz with a design tolerance of plus-or-minus 1 kHz, and an additional plus-or-minus 1 kHz variation over temperature.
However, recent advances in integrated circuit (IC) technology make it possible to integrate these filters. Integrated filters are commonly fabricated using a gyrator based implementation of a coupled resonator bandpass filter as is known to those skilled in the art. FIG. 1 illustrates a transconductance amplifier. The well known relation of the transconductance of an amplifier to its bias current is given by:

$$G = Iout / Vin = I / 2Vt$$

where:

I =      the amplifier DC bias current; and
Vt =      KT/Q

where:

K =      Boltzman's constant;
T =      absolute temperature; and
Q =      charge on an electron.

From these equations, it will be apparent to those skilled in the art that the bias current I of the amplifier must be precisely generated and controlled to ensure consistent operation over a wide temperature range (-10 degrees C to 50 degrees C). As is known, bias current is the DC current required to set the filter to its desired frequency. Currently, bias current control is achieved by trimming components of the integrated circuit to eliminate large tolerant variations that are common in typical IC processing. Also, additional temperature compensation is necessary in conventional ICs to further restrict the variation that typically occur over the IC's operating temperature range.
Thus, what is needed is a technique that eliminates the trimming requirement of wide variation component parameters over the operating temperature range of the IC.
EP0204088 describes an IC with a phase locked loop having a voltage controlled oscillator. The oscillation frequency of the oscillator is dependent on the product of a resistor and a variable capacitor.

Summary of the Invention

According to a first aspect of the invention there is provided a selective call receiver as claimed in claim 1.
According to a second aspect of the invention there is provided a method for controlling a controlled filter as claimed in claim 5.
According to a third aspect of the invention there is provided a selective call receiver as claimed in claim 6.

Brief Description of the Drawings

FIG. 1 is schematic diagram of a typical transconductance amplifier.
FIG. 2 is a block diagram of a selective call receiver in accordance with the present invention.
FIG. 3 is a block diagram of a bandpass filter in accordance with the present invention.

Description of a Preferred Embodiment

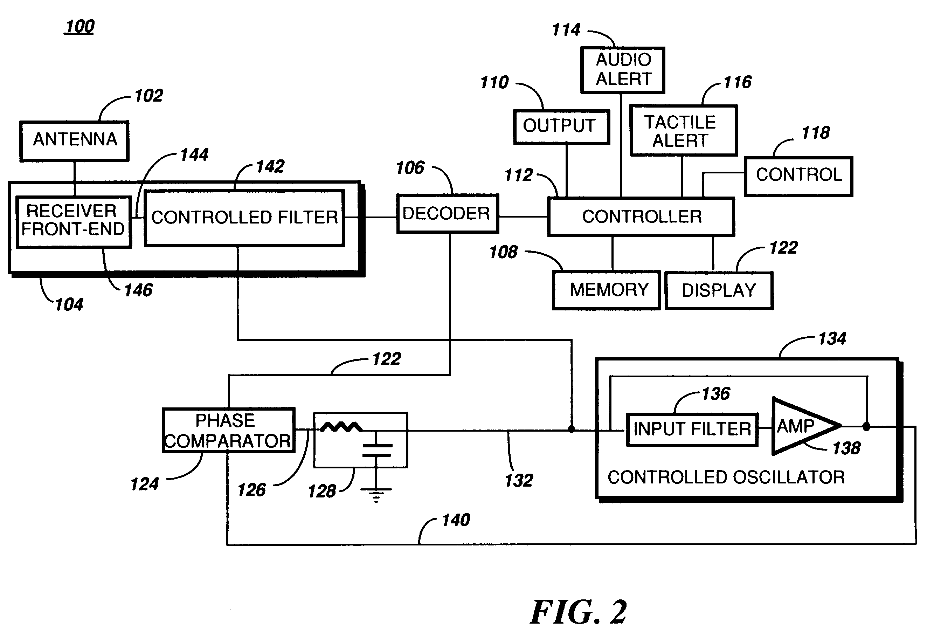

Referring to FIG. 2, a selective call radio receiver 100 (e.g., a pager) comprises an antenna 102 that provides an RF carrier signal that is mixed with a local oscillator signal contained within a receiver module 104. The receiver module 104 includes a receiver front-end 146 which is known to those skilled in the arts and a controlled filter 142 to be hereafter further discussed . The receiver 104 generates a recovered signal suitable for processing by a decoder 106 in a manner well known to those skilled in the art. The decoder 106 converts the signal to an address. A controller 112 compares the decoded address with one or more predetermined addresses contained in a memory 108. When the addresses are substantially similar, the user is alerted that a signal has been received either by an audio alert (e.g., speaker) 114 or a tactile alert (e.g., vibrator) 116. The received signal may also include optional message data directed to some selective call receivers. Also, if the selective call receiver includes an optional voice output, recovered audio components of the received R.F. signal may be presented on the output module 110. For a message or a voice selective call receiver, the recovered message or voice output is stored in a memory 108 for subsequent presentation by an display module 120. The display module 120 will automatically, or when manually selected by controls 118, presents the message, such as by displaying the message on a display.
According to the invention, a reference signal 122 from the decoder 106 comprises a decoder clock signal 122, which, together with an output signal 140, are compared by a phase comparator 124. A phase difference between these signals generates an error signal 126 that is processed by a loop filter 128 to produce a control signal 132. The control signal 132 drives a controlled oscillator 134 that includes an input filter 136, and an amplifier 138.

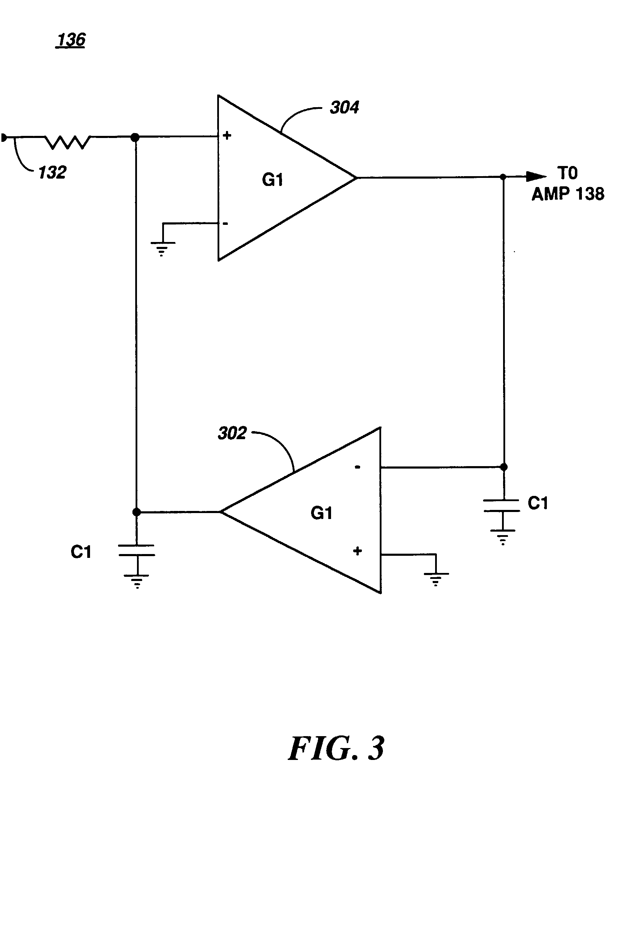

Referring to FIG 3, amplifiers 302, 304 are matched (i.e., substantially the same transconductance G1). Two capacitors labeled C1 are selected to such that when the input filter 136 is provided with a zero phase shift signal the oscillator will oscillate at the frequency of the reference signal 122.

Referring again to FIG. 2, the controlled oscillator 134 includes an amplifier 138 that amplifies a signal from the input filter 136 to reach the required level to maintain. A feedback loop within the controlled oscillator 134 ensures that the controlled oscillator 134 oscillates without substantial variation in its operating frequency. The output signal 140 of the oscillator 139 is fed back to the phase comparator 124, which generates an error signal 126 to ensure that the output signal 140 is substantially equal to the reference signal 122. In this way, the controlled oscillator 134 will oscillate at the frequency of the reference signal 122. The feedback loop ensures that any variation between the reference signal 122 and the output signal 140 is corrected. This eliminates the need to trim the component values and the need for temperature compensators, because the variation due to operating temperature is minimized. The close tolerance of the reference oscillator is due to its crystal bias and may be synthesized.

Still referring to FIG. 2, the controlled filter 142 receives a signal 144, which preferably comprises an IF signal from the receiver front-end 146 may have a frequency substantially larger than the frequency of the reference signal 122. The controlled filter 142 is controlled by the control signal 132 to vary the frequency response by varying parameters, for example, the transconductance of the controlled filter 142. The center frequency Wo of the filter given by:

$$Wo = G/C$$

where:

G   is the transconductance of the amplifier; and
C   is the nodal capacitance (not shown).

The controlled filter 142 is preferably similar in structure to the input filter 136 shown in FIG. 3, except that the amplifiers have a transconductance G2 and the capacitors have a capacitance C2. Those skilled in the arts will appreciate that by selecting the G2 and C2, the controlled filter 142 may be set to a different frequency. The capacitance (or a varactor not shown) of the controlled filter 142 is selected to produce a desired ratio of frequency response between the input filter 136 and the controlled filter 142. The transconductance parameter of the controlled filter 142 is similarly chosen, but its value is varied by the control signal 132 to maintain the desired frequency response. The input filter 136 is maintained precisely on frequency because the decoder clock signal (reference signal 122) is driven by an accurate clock within the decoder 106 (not shown). Preferably, the frequency of the controlled filter 142 is set between the harmonics of the reference signal 122 to avoid desensitizing the receiver 104. For example:

assuming the frequency of the reference signal (122) = 38.4 kHz;

$$G2/G1=4;$$

and

$$C2/C1 = 40/36,$$

the center frequency of the controlled filter 142 is preferably set to 138.24 kHz. In this way, the frequency response of the controlled filter 142 will be set between the harmonic interferences generated from the reference signal 122, thus preventing desensitization of the receiver 104.

In summary, a selective call receiver includes a controlled oscillator that generates an output signal from a received signal. The controlled oscillator has an input filter that is controlled by a control signal generated from a reference signal. The output signal and the reference signal, generated from the received signal, are used to adjust the output of the controlled oscillator to equal the reference signal. The control signal controls a controlled filter that filters a second signal. In this way, the need for trimming the component values are eliminated and the variation due to operating temperature is minimized, thereby eliminating the need for temperature compensators. Furthermore, because the controlled filter and the input filter are controlled by the control signal, the frequency response of the controlled filter varies with the frequency response of the input filter. In this way, the frequency response of the controlled filter will be set between the harmonic interferences generated from the refere e signal, thus preventing desensitization of the receiver 104.

## Claims

1.   A selective call receiver (100), comprising:

receiving means (104) for receiving a signal, said receiving means (104) including a controlled filter (142) having a variable frequency response;
decoder means (106) coupled to the controlled filter (142) of said receiving means (104) for decoding the received signal, said decoder means (106) having a decoder clock for generating a decoder clock signal (122); and
a controlled oscillator (134) having an input filter (136) comprising a pair of transconductance amplifiers (302, 304) controlled by a control signal (132) wherein the frequency of the input filter (136) is substantially lower than the frequency of the controlled filter (142), the controlled filter (142) being tuned to operate between the harmonic interferences generated from the decoder clock signal (122) to prevent desensitization of the receiving means (104), the controlled oscillator (134) generating an output signal (140) in response to the control signal (132) for coupling to a comparing means (124) which generates the control signal (132) from the decoder clock signal (122) and the output signal (140), the control signal (132) is further coupled to the controlled filter (142) for controlling the frequency response of the controlled filter (142) for filtering the received signal.

2. The selective call receiver (100) according to claim 1 wherein the comparing means (124) is arranged for comparing the output signal (140) with the decoder clock signal (122) for generating an error signal (126).

3. The selective call receiver (100) according to claim 2 further comprising a loop filter (128) for generating the control signal (132) in response to the error signal (126).

4. The selective call receiver (100) according to any preceding claim wherein the output of the input filter (136) is substantially equal to the decoder clock signal (122).

5. A method for controlling a controlled filter (142) from a decoder clock signal (122) being generated by a decoder (106) for filtering a received signal, comprising the steps of:

(a) filtering the received signal with the controlled filter (142);
(b) generating an output signal (140) of a controlled oscillator (134) in response to the decoder clock signal (122);
(c) comparing the decoder clock signal (122) and the output signal (140) to generate a control signal (132); and
(d) controlling the frequency response of the controlled filter (142) with the control signal (132) for filtering the received signal, the control signal being filtered by an input filter (136) of said controlled oscillator, said input filter comprising a pair of transconductance amplifiers (302, 304), said step of controlling further comprising tuning the controlled filter (142) to operate between the harmonic interferences generated from the decoder clock signal (122) to prevent desensitization of a receiving means (104) receiving the received signal.

6. A selective call receiver (100) comprising:

receiving means (104) for receiving a signal, the receiving means (104) including a controlled filter (142) having a variable frequency response;

decoder means (106) coupled to the receiving mean (104) for decoding the received signal, said decoder means (104) including a decoder clock for generating a decoder clock signal (122) independent of the received signal;

a phase comparator means (124) coupled to the decoder means (106) for generating a control signal (132) in response to the decoder clock signal (122) and an output signal (140) of a controlled oscillator (134);

said controlled oscillator (134), coupled to the phase comparator (124), having an input filter (136) comprising a pair of transconductance amplifiers (302, 304) controlled by the control signal (132), the controlled oscillator (134) generating said output signal (140) in response to the control signal (132), the control signal (132) is further coupled to the controlled filter (142) of the receiving means (104) for controlling the frequency response of the controlled filter (142) for filtering the received signal wherein the controlled filter (142) being tuned to operate between the harmonic interferences generated from the decoder clock signal (122) to prevent desensitization of the receiving means (104);

the phase comparator means compares (124) the output signal (140) to the decoder clock signal (122) for producing an error signal (126); and

means for processing (128) the error signal (126) for generating the control signal (132) for controlling the controlled filter (142) and the controlled oscillator (134).

**Patentansprüche**

1. Selektivruf-Empfänger (100), welcher umfaßt:

Empfängermittel (104) zum Empfangen eines Signals, welches Empfängermittel (104) ein gesteuertes Filter (142) mit einem variablen Frequenz-Ansprechverhalten enthält;

mit dem gesteuerten Filter (142) des Empfängermittels (104) gekoppeltes Dekodiermittel zum Dekodieren des empfangenen Signals, welches Dekodiermittel (106) einen Dekodier-Taktgeber zum Erzeugen eines Dekodier-Taktsignals (122) besitzt; und

einen gesteuerten Oszillator (134) mit einem Eingangsfilter (136), welches ein Paar durch ein Steuersignal (132) gesteuerte Transkonduktanz-Verstärker (302, 304) umfaßt, wobei die Frequenz des Eingangsfilters (136) wesentlich niedriger als die Frequenz des gesteuerten Filters (142) liegt, das gesteuerte Filter (142) zum Betrieb zwischen den von dem Dekodier-Taktsignal (122) erzeugten harmonischen Interferenzen abgestimmt ist, um eine Desensibilisierung des Empfängermittels (104) zu verhindern, der gesteuerte Oszillator (134) ein Ausgangssignal (140) in Reaktion auf das Steuersignal (132) erzeugt zum Einkoppeln in ein Komparatormittel (124), welches das Steuersignal (132) aus dem Dekodier-Taktsignal (122) und dem Ausgangssignal (140) erzeugt, welches Steuersignal (132) weiter an das gesteuerte Filter (142) angelegt wird, um das Frequenzansprechverhalten des gesteuerten Filters (142) zum Filtern des empfangenen Signals zu steuern.

2. Selektivrufempfänger (100) nach Anspruch 1, bei dem das Komparatormittel (124) zum Vergleichen des Ausgangssignals (140) mit dem Dekodier-Taktsignal (122) ausgelegt ist, um ein Fehlersignal (126) zu erzeugen.

3. Selektivrufempfänger (100) nach Anspruch 2, der weiter umfaßt ein Schleifenfilter (128) zum Erzeugen des Steuersignals (132) in Reaktion auf das Fehlersignal (126).

4. Selektivrufempfanger (100) nach einem der vorangehenden Ansprüche, bei dem das Ausgangssignal des Eingangsfilters (136) im wesentlichen gleich dem Dekodier-Taktsignal (122) ist.

5. Verfahren zum Steuern eines gesteuerten Filters (142) mit einem Dekodier-Taktsignal (122), das durch einen Dekodierer (106) zum Filtern eines empfangenen Signals erzeugt wird, mit den Schritten:

(a) Filtern des empfangenen Signals mit dem gesteuerten Filter (142);

(b) Erzeugen eines Ausgangssignals (140) eines gesteuerten Oszillators (134) in Reaktion auf das Dekodierer-Taktsignal (122);

(c) Vergleichen des Dekodierer-Taktsignals (122) mit dem Ausgangssignal (140) zum Erzeugen eines Steuersignals (132); und

(d) Steuern des Frequenzansprechverhaltens des gesteuerten Filters (142) mit dem Steuersignal (132) zum Filtern des empfangenen Signals, wobei das Steuersignal durch ein Eingangsfilter (136) des gesteuerten Oszillators gefiltert wird und das Eingangsfilter ein Paar Transkonduktanz-Verstärker (302, 304) umfaßt, und der Steuerungsschritt weiter umfaßt das Abstimmen des gesteuerten Filters (142) zum Betrieb zwischen den durch das Dekodierer-Taktsignal (122) erzeugten harmonischen Interferenzen, um eine Desensibilisierung eines das empfangene Signal empfangenden Empfängermittels (104) zu vermeiden.

6. Selektivrufempfänger (100), welcher umfaßt:

Empfängermittel (104) zum Empfangen eines Signals, welches Empfängermittel (104) ein gesteuertes Filter (142) mit einem variablen Frequenzansprechverhalten enthält;

mit dem Empfängermittel (104) zum Dekodieren des empfangenen Signals gekoppeltes Dekodierermittel (106), welches Dekodierermittel (104) einen Dekodier-Taktgeber zum Erzeugen eines von dem empfangenen Signal unabhängigen Dekodier-Taktsignals (122) enthält;

ein mit dem Dekodiermittel (106) gekoppeltes Phasenkomparatormittel (124) zum Erzeugen eines Steuersignals (132) in Reaktion auf das Dekodier-Taktsignal (122) und ein Ausgangssignals (140) eines gesteuerten Oszillators (134);

wobei der mit dem Phasenkomparator (124) gekoppelte gesteuerte Oszillator (134) ein Eingangsfilter (136) besitzt, welches ein Paar durch das Steuersignal (132) gesteuerte Transkonduktanz-Verstärker (302, 304) umfaßt, der gesteuerte Oszillator (134) das Ausgangssignal (140) in Reaktion auf das Steuersignal (132) erzeugt, das Steuersignal (132) weiter an das gesteuerte Filter (142) des Empfängermittels (104) angelegt wird zum Steuern des Frequenzansprechverhaltens des gesteuerten Filters (142) zum Filtern des empfangenen Signals, und das gesteuerte Filter (142) zum Betrieb zwischen den durch das Dekodierer-Taktsignal (122) erzeugten harmonischen Interferenzen abgestimmt wird, um eine Desensibilisierung des Empfängermittels (104) zu vermeiden;

das Phasenkomparatormittel das Ausgangssignal (140) mit dem Dekodierer-Taktsignal (122) zum Erzeugen eines Fehlersignals (126) vergleicht; und

Mittel zum Verarbeiten (128) des Fehlersignals (126) zum Erzeugen des Steuersignals (132), um das gesteuerte Filter (142) und den gesteuerten Oszillator (134) zu steuern.

## Revendications

1. Récepteur d'appels sélectifs (100) comprenant :

   un moyen de réception (104) permettant de recevoir un signal, ledit moyen de réception (104) comportant un filtre commandé (142) ayant une réponse en fréquence variable ;
   un moyen formant décodeur (106) couplé au filtre commandé (142) dudit moyen de réception (104) pour décoder le signal reçu, ledit moyen formant décodeur (106) ayant une horloge de décodeur permettant de générer un signal d'horloge de décodeur (122) ; et
   un oscillateur commandé (134) ayant un filtre d'entrée (136) comprenant une paire d'amplificateurs de transconductance (302, 304) commandés par un signal de commande (132) dans lequel la fréquence du filtre d'entrée (136) est sensiblement inférieure à la fréquence du filtre commandé (142), le filtre commandé (142) étant réglé pour fonctionner entre les parasites par harmoniques générés par le signal d'horloge de décodeur (122) afin d'empêcher la désensibilisation du moyen de réception (104), l'oscillateur commandé (134) générant un signal de sortie (140) en réponse au signal de commande (132) pour être couplé à un moyen de comparaison (124) qui génère le signal de commande (132) à partir du signal d'horloge de décodeur (122) et du signal de sortie (140), le signal de commande (132) étant en outre couplé au filtre commandé (142) pour commander la réponse en fréquence du filtre commandé (142) pour filtrer le signal reçu.

2. Récepteur d'appels sélectifs (100) selon la revendication 1, dans lequel le moyen de comparaison (124) est conçu pour comparer le signal de sortie (140) avec le signal d'horloge de décodeur (122) pour générer un signal d'erreur (126).

3. Récepteur d'appels sélectifs (100) selon la revendication 2, comprenant en outre un filtre de boucle (128) permettant de générer le signal de commande (132) en réponse au signal d'erreur (126).

4. Récepteur d'appels sélectifs (100) selon l'une quelconque des revendications précédentes, dans lequel la sortie du filtre d'entrée (136) est sensiblement égale au signal d'horloge de décodeur (122).

5. Procédé permettant de commander un filtre commandé (142) à partir d'un signal d'horloge de décodeur (122) généré par un décodeur (106) pour filtrer un signal reçu, comprenant les étapes consistant à :

   (a) filtrer le signal reçu avec le filtre commandé (142) ;
   (b) générer un signal de sortie (140) d'un oscillateur commandé (134) en réponse au signal d'horloge de décodeur (122) ;
   (c) comparer le signal d'horloge de décodeur (122) et le signal de sortie (140) pour générer un signal de commande (132) ; et
   (d) commander la réponse en fréquence du filtre commandé (142) avec le signal de commande (132) pour filtrer le signal reçu, le signal de commande étant filtré par un filtre d'entrée (136) dudit oscillateur commandé, ledit filtre d'entrée comprenant une paire d'amplificateurs de transconductance (302, 304), ladite étape de commande comprenant en outre le réglage du filtre commandé (142) pour qu'il fonctionne entre les parasites par harmoniques générés à partir du signal d'horloge de décodeur (122) pour empêcher la désensibilisation d'un moyen de réception (104) recevant le signal reçu.

6. Récepteur d'appels sélectifs (100), comprenant :

   un moyen de réception (104) permettant de recevoir un signal, le moyen de réception (104) comportant un filtre commandé (142) présentant une réponse en fréquence variable ;
   un moyen formant décodeur (106) couplé au moyen de réception (104) permettant de décoder le signal reçu, ledit moyen formant décodeur (104) comportant une horloge de décodeur permettant de générer un signal d'horloge de décodeur (122) indépendant du signal reçu ;
   un moyen formant comparateur de phase (124) couplé au moyen formant décodeur (106) permettant de générer un signal de commande (132) en réponse au signal d'horloge de décodeur (122) et un signal de sortie (140) d'un oscillateur commandé (134) ;
   ledit oscillateur commandé (134), couplé au comparateur de phase (124), ayant un filtre d'entrée (136) comprenant une paire d'amplificateurs . de transconductance (302, 304) commandés par le signal de commande (132), l'oscillateur commandé (134) générant ledit signal de sortie (140) en réponse au signal de commande (132), le signal de commande (132) est en outre couplé au filtre commandé (142) du moyen de réception (104) pour commander la réponse en fréquence du filtre commandé (142) pour filtrer le signal reçu, le filtre commandé (142) étant réglé pour fonctionner entre les parasites par harmoniques générés à partir du signal d'horloge de décodeur (122) pour empêcher la désensibilisation du moyen de réception (104) ;
   le moyen formant comparateur de phase compare (124) le signal de sortie (140) avec le signal d'horloge de décodeur (122) pour produire un signal d'erreur (126) ; et

un moyen permettant de traiter (128) le signal d'erreur (126) pour générer le signal de commande (132) permettant de commander le filtre commandé (142) et l'oscillateur commandé (134).

*FIG. 1*

**FIG. 2**

EP 0 554 384 B1

*FIG. 3*